**Europäisches Patentamt**

**European Patent Office**

**Office européen des brevets**

(11) Veröffentlichungsnummer: **0 134 285**
**B1**

(12) # EUROPÄISCHE PATENTSCHRIFT

(45) Veröffentlichungstag der Patentschrift:
22.04.87

(51) Int. Cl.⁴: **B 60 R 1/06**

(21) Anmeldenummer: **83108656.6**

(22) Anmeldetag: **02.09.83**

(54) **Fahrzeugrückspiegelanordnung.**

(43) Veröffentlichungstag der Anmeldung:
**20.03.85 Patentblatt 85/12**

(45) Bekanntmachung des Hinweises auf die Patenterteilung:
**22.04.87 Patentblatt 87/17**

(84) Benannte Vertragsstaaten:
**AT BE CH DE FR GB IT LI LU NL SE**

(56) Entgegenhaltungen:
**DE - A - 2 845 446**
**DE - U - 1 728 720**
**FR - A - 2 472 493**
**GB - A - 1 428 991**
**US - A - 4 111 532**

(73) Patentinhaber: **Sillmann, Karl, Keppenbach 2,
D-7831 Freiamt (DE)**

(72) Erfinder: **Sillmann, Karl, Keppenbach 2, D-7831 Freiamt
(DE)**

(74) Vertreter: **Rackette, Karl, Dipl.-Phys. Dr.-Ing,
Kaiser-Joseph-Strasse 179 Postfach 1310,
D-7800 Freiburg (DE)**

## Beschreibung

Die Erfindung bezieht sich auf eine Fahrzeugrückspiegelanordnung der im Oberbegriff des Patentanspruchs 1 angegebenen Art.

Bei einer bekannten Fahrzeugrückspiegelanordnung dieser Art (DE-U-1728720) ist als nachteilig anzusehen, dass in Gebrauchsstellung des Zusatzspiegels, bei der sich der Zusatzspiegel in einer aus dem Gehäuse des Hauptspiegels ausgefahrenen Stellung befindet, die Öffnung in der Seitenwand des Hauptspiegelgehäuses, durch die der Zusatzspiegel aus- und eingefahren wird, nicht vollkommen geschlossen ist, so dass in den Innenraum des Hauptspiegelgehäuses Schmutz, Regenwasser und dgl. eindringen kann.

Der Erfindung liegt die Aufgabe zugrunde, eine Fahrzeugrückspiegelanordnung der im Oberbegriff des Patentanspruchs 1 angegebenen Art zu schaffen, bei der der den Zusatzspiegel bei Nichtgebrauch des Zusatzspiegels aufnehmende Innenraum des Hauptspiegelgehäuses auch in Gebrauchsstellung des Zusatzspiegels vollkommen geschlossen ist.

Diese Aufgabe wird erfindungsgemäss durch die im Kennzeichnungsteil des Anspruchs 1 angegebenen Merkmale gelöst.

Dadurch wird insbesondere erreicht, dass sowohl im Anwendungszustand der Fahrzeugrückspiegelanordnung als Doppelrückspiegel, wobei nach Verlassen des Hauptspiegelgehäuses der Zusatzspiegel mit Gelenkverbindung in gelenkiger Gebrauchsstellung vom Hauptspiegelgehäuse absteht, als auch im Anwendungszustand der Fahrzeugrückspiegelanordnung als Normalrückspiegel, wobei wegen Nichtgebrauch des Zusatzspiegels dieser samt Gelenkverbindung in das Innere des Hauptspiegelgehäuses zurückgeführt ist, die Hauptspiegelgehäuseöffnung, durch die der Zusatzspiegel und Gelenkverbindung aus dem Hauptspiegelgehäuse ausgeführt und in das Hauptspiegelgehäuse zurückgeführt werden, vollkommen verschlossen ist. Diese Vorteile werden jeweils auch dann erreicht, wenn der Rücken des Zusatzspiegels strömungsgünstig ausgebildet ist, etwa durch in Fahrtrichtung abstehende, längsseitige Wölbung oder durch pyramidenähnliches Abstehen des Spiegelrückens in Fahrtrichtung; der Rücken des Zusatzspiegels sich strömungsgünstig von innen nach aussen verjüngt; der Zusatzspiegel ovales Format oder Rundformat aufweist; Gelenkverbindungen (Gelenke, Arm) im Durchmesser grösser sind als die Querabmessung des Zusatzspiegels und teilweise oder ganz von der Innenkante oder vom Rücken des Zusatzspiegels in Fahrtrichtung abstehen, wobei Gelenke wiederum im Durchmesser noch grösser sein können als der Durchmesser des Armes; Gelenke, anstatt an der Innenkante oder mit Arm in der Nähe der Innenkante mit dem Rücken des Zusatzspiegels verbunden, mit Hilfe des Armes in der Mitte oder in der äusseren Hälfte des Spiegelrückens mit diesem verbunden sind, mithin Gelenkverbindungen grössenmässig so ausgebildet und geometrisch so angeordnet sind, dass sie notwendigen statischen Anforderungen voll genügen, weite Gelenkeinschläge erreichbar und grosse Verstellwinkel des Zusatzspiegels nach allen rückwärtigen Blickrichtungen möglich sind sowie der Zusatzspiegel am Arm um die eigene Querachse auch in Hochstellung, Tiefstellung und Weitstellung drehbar und aus diesen Stellungen nach allen rückwärtigen Blickrichtungen verstellbar ist; der Eigenverstellwiderstand der Gelenke verstärkt durch die vergrösserten Gleitflächen, Vibrationen und Schwingungen sowie dadurch bedingtem Schwimmen und unerwünschtem Eigenverstellen des Zusatzspiegels entgegengewirkt wird und im übrigen auch dadurch begegnet ist, dass die Gelenkverbindung an der Wand des Hauptspiegelgehäuses befestigt ist, von der sie mit dem Zusatzspiegel in dessen Gebrauchsstellung absteht.

Zweckmässige Weiterbildungen des Gegenstandes der Erfindung sind in den Unteransprüchen gekennzeichnet.

In der Zeichnung sind Ausführungsbeispiele der Erfindung dargestellt.

Es zeigen:

Fig. 1 die Fahrzeugrückspiegelanordnung gemäss der Erfindung in einer perspektivischen Ansicht entgegen der Blickrichtung eines Fahrzeugführers,

Fig. 2 die Fahrzeugrückspiegelanordnung nach Fig. 1 nach Abnahme des Hauptspiegelgehäusewandteils in einer perspektivischen Ansicht,

Fig. 3 die Fahrzeugrückspiegelanordnung nach dem Wendevorgang und vor und nach dem Einführen des Zusatzspiegels sowie der Gelenkverbindung in das Hauptspiegelgehäuse, der Zusatzspiegel in diesem Ausführungsbeispiel im Hauptspiegelgehäuse zur Rückwand dieses Gehäuses schauend, in einer perspektivischen Ansicht,

Fig. 4 die Fahrzeugrückspiegelanordnung nach dem Einsetzen und Verschliessen des Hauptspiegelgehäusewandteils,

Fig. 5 ein weiteres Ausführungsbeispiel des Gegenstandes der Erfindung gemäss Fig. 3 mit Arm und Blickfenster und Fixierringen im Kugelkopfgelenk,

Fig. 6 die Fahrzeugrückspiegelanordnung gemäss Fig. 1 oder 7 nach dem Wendevorgang des Hauptspiegelgehäusewandteils mit Zusatzspiegel, die Gelenkverbindung in der Perspektive nicht sichtbar,

Fig. 7 eine Fig. 6 entsprechende perspektivische Ansicht zur Darstellung eines in sich auskuppelbaren Armes mit Kupplungsvorrichtung im Kupplungsrohr,

Fig. 8a ein Hauptspiegelgehäusewandteil der Fahrzeugrückspiegelanordnung mit einer Flügelschraube zur Befestigung des Hauptspiegelgehäusewandteils am Hauptspiegelgehäuse,

Fig. 8b ein weiteres Ausführungsbeispiel eines Hauptspiegelgehäusewandteils mit einem flachen Schloss zum Einschliessen des Hauptspiegelgehäusewandteils im Gehäuserahmen,

Fig. 9 ein weiteres Ausführungsbeispiel der Fahrzeugrückspiegelanordnung mit zwei Gelenken und Arm als Gelenkverbindung nach dem Abnehmen des Hauptspiegelgehäusewandteils vom Hauptspiegelgehäuse und vor dem Wendevorgang des Hauptspiegelgehäusewandteils um seine nach vorne gerichtete Achse zum nachfolgenden Einführen des Zusatzspiegels mit Gelenkverbindung in das Hauptspiegelgehäuse.

Die in der Zeichnung dargestellte Fahrzeugrückspiegelanordnung besteht aus einem einen Hauptspiegel 10 aufweisenden Hauptspiegelgehäuse 1, das mit Hilfe einer Halterung 2 am Fahrzeug befestigbar ist, und einem Zusatzspiegel 7, der mit einer abnehmbaren Gehäusewand 3 bzw. mit einem abnehmbaren Teil der Gehäusewand 3 des Hauptspiegelgehäuses 1 verbunden und in kehrseitigen Wendestellungen am Hauptspiegelgehäuse 1 befestigbar ist. Der nicht abnehmbare Teil der Hauptspiegelgehäusewand bildet einen Rahmen 17.

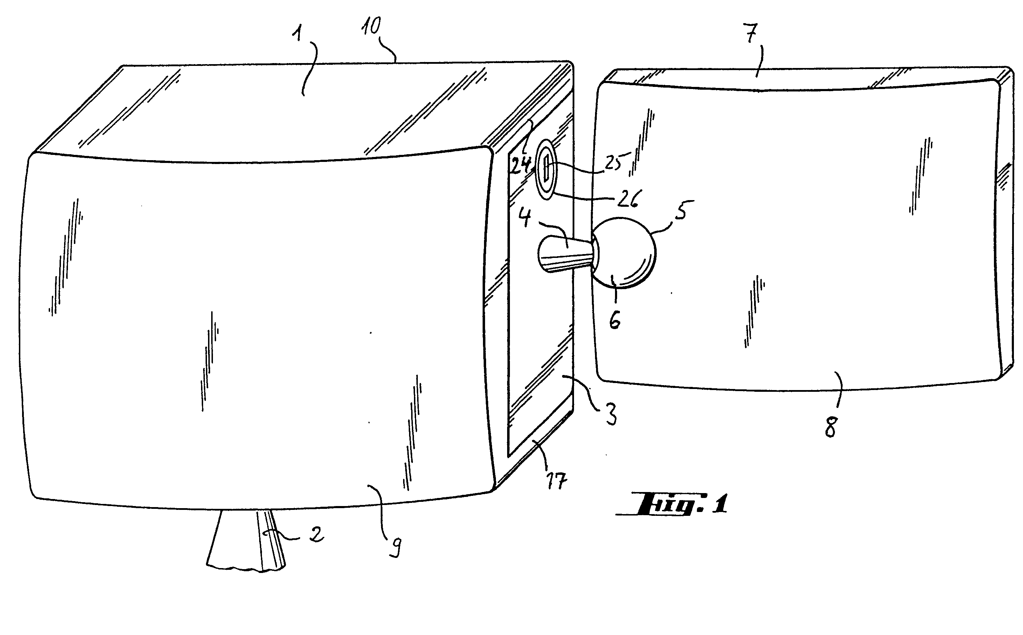

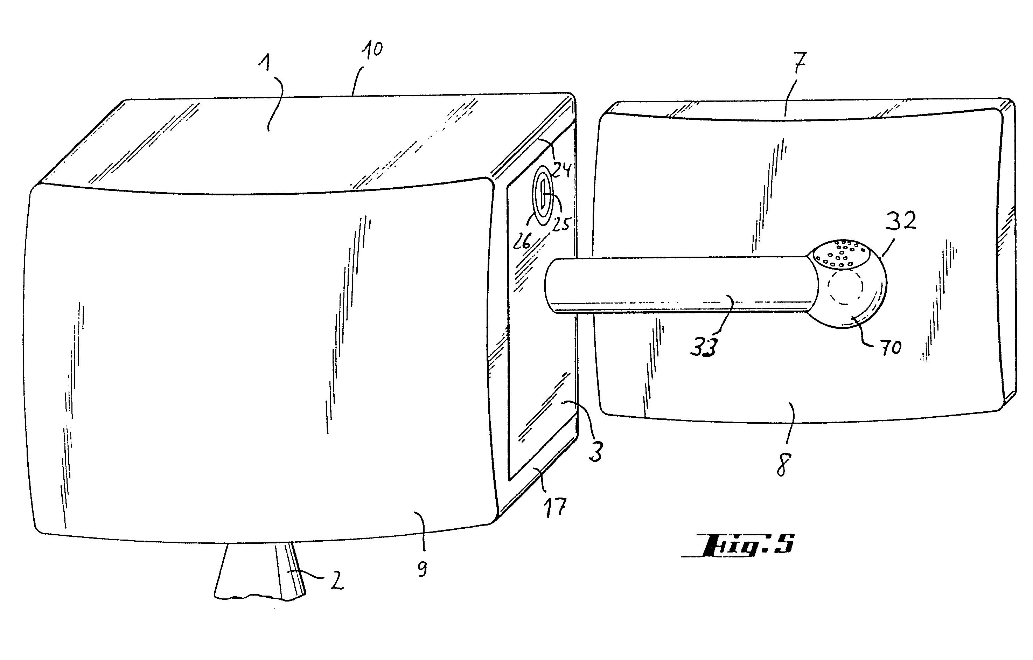

In den in der Zeichnung dargestellten Ausführungsbeispielen ist der Zusatzspiegel 7 mit einem plattenförmigen Hauptspiegelgehäusewandteil 3 mittels Arm 4 und Kugelgelenk 6 (Fig. 1 bis 3) oder mittels Arm 33 und Kugelgelenk 32 (Fig. 5, 7 und 9) verbunden. Bei den Ausführungsbeispielen nach Fig. 1 bis 3 und 5 ist der Arm 4 bzw. der Arm 33 jeweils starr an dem Hauptspiegelgehäusewandteil 3 angebracht. Gemäss Fig. 5 ragt der Arm 33 bis in die äussere Hälfte des Spiegelrükkens 8 des Zusatzspiegels 7, damit durch Drehen des Zusatzspiegels 7 um die rechtwinklig zu diesem durch das Kugelgelenk 32 verlaufende Achse der Abstand zwischen Zusatzspiegel 7 und dem Hauptspiegel 10 vergrössert werden kann, um auf diese Weise den Sichtbereich des Zusatzspiegels 7 noch zu erweitern.

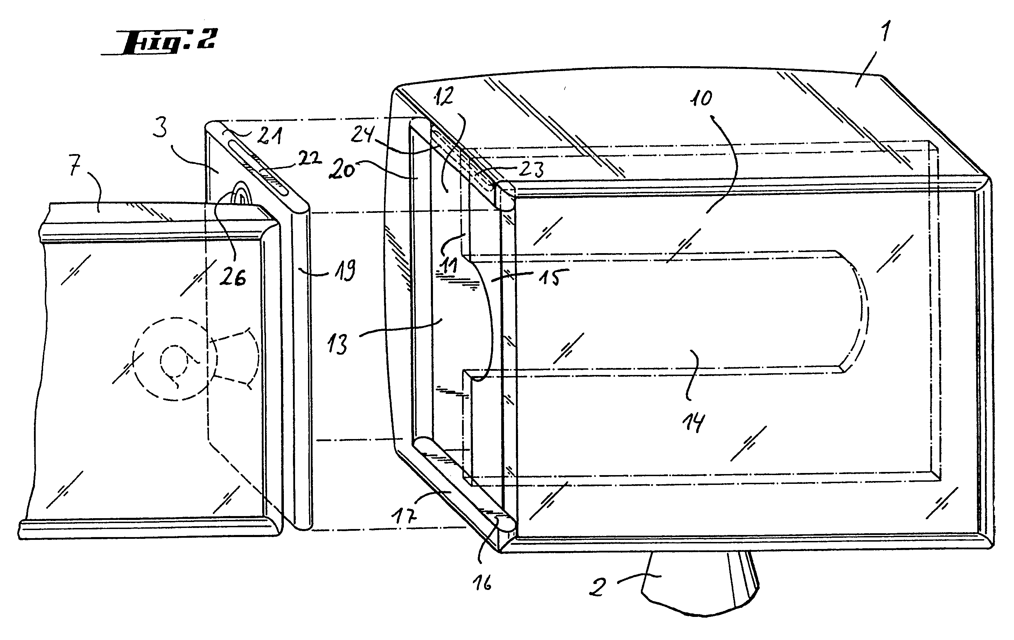

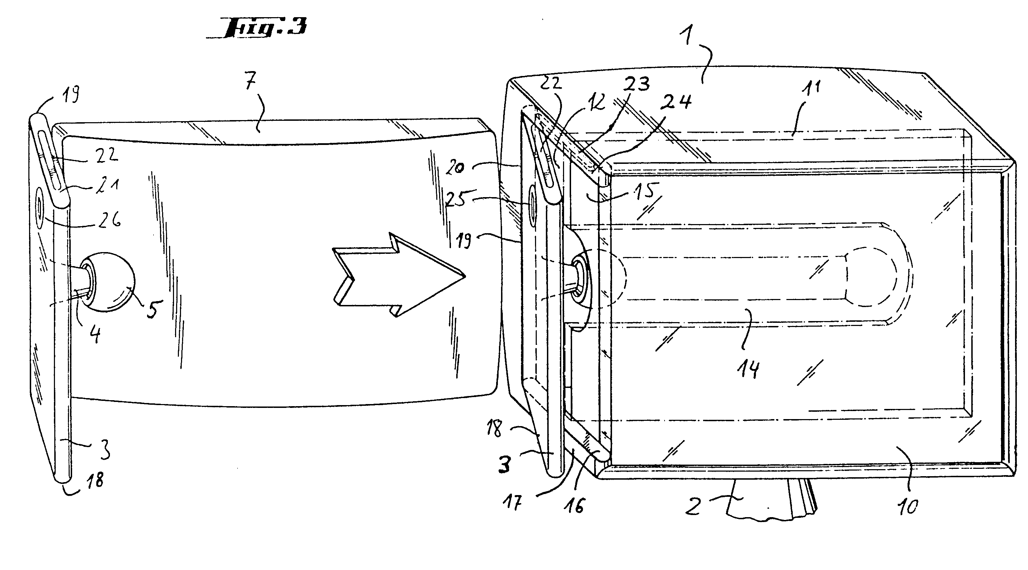

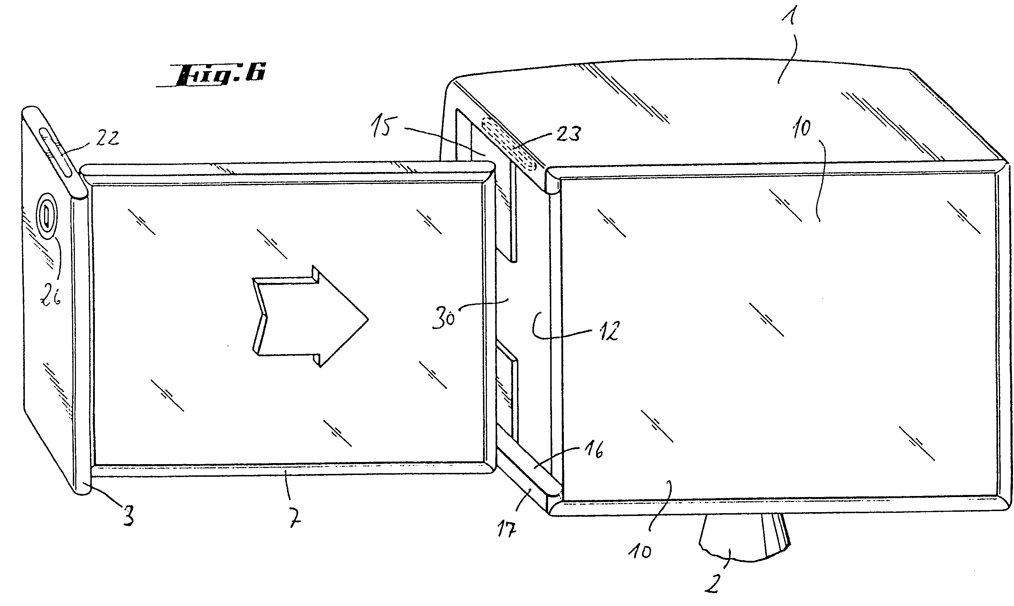

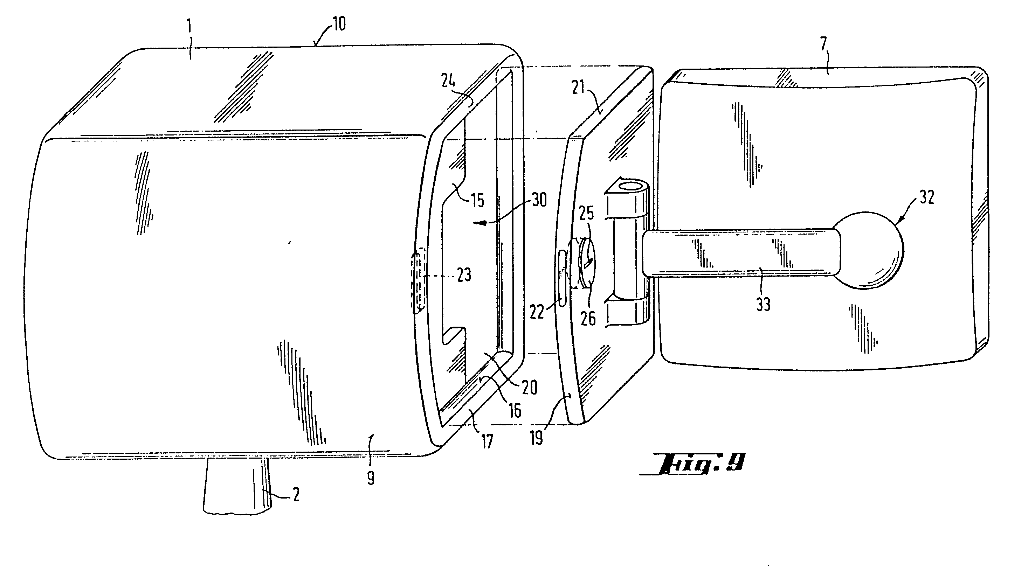

Der abnehmbare Hauptspiegelgehäusewandteil 3 füllt eine Öffnung 13 bzw. 30 im Hauptspiegelgehäuse 1 aus, die zum Innenraum 12 des Hauptspiegelgehäuses 1 hin durch einen magnetischen Wandabschnitt 15 teilweise abgedeckt ist. Der magnetische Wandabschnitt 15 liegt an der Innenwand des Rahmens 17 an, der als verbleibender Teil der Hauptspiegelgehäusewand die von dem abnehmbaren Hauptspiegelgehäusewandteil 3 ausgefüllte Öffnung 13 bzw. 30 begrenzt. Der magnetische Wandabschnitt 15 kann den spiegelglasseitigen Teil der Öffnung 13 begrenzen (Fig. 2 und 3) oder den zur Hauptspiegelgehäuserückwand 9 gerichteten Teil der Öffnung 30 (Fig. 6 und 9). Durch den von dem magnetischen Wandabschnitt 15 nicht abgedeckten Teil der Öffnung 13 bzw. 30 wird der Zusatzspiegel 7 mit den ihn mit dem Hauptspiegelgehäusewandteil 3 verbindenden Arm 4 und Kugelgelenk 6 bzw. Arm 33 und Kugelgelenk 32 in den Innenraum 12 des Hauptspiegelgehäuses 1 eingeführt. Der Rahmen 17 weist keinen spiegelglasseitigen hinteren senkrechten Balken auf und steht wie die Spiegelwulst des Hauptspiegels 10 nach hinten über.

Die den Zusatzspiegel 7 tragende Hauptspiegelgehäusewand bzw. der Hauptspiegelgehäusewandteil 3 aus ferromagnetischem Material ist in kehrseitigen Wendestellungen im Rahmen 17 formschlüssig placierbar und liegt magnetisch haftend an dem magnetischen Wandabschnitt 15 an.

Gemäss Fig. 1, 5 und 7 befindet sich der Zusatzspiegel 7 bei formschlüssiger Placierung des Hauptspiegelgehäusewandteils 3 im Rahmen 17 in einer vorgegebenen, von Spiegelfläche zu Spiegelfläche fluchtenden Grundstellung zum Hauptspiegel 10. Mithin ist im Verhältnis zum Innenraum 12 insoweit der Zusatzspiegel 7 nach hinten versetzt.

Fig. 3 zeigt den Hauptspiegelgehäusewandteil 3 nach dem Wendevorgang sowie den samt verbindenden Teilen (Kugelgelenk 6 oder Arm 33 und Kugelgelenk 32) mitgewendeten Zusatzspiegel 7 vor und nach dem Einführen durch die Öffnung 13 in das Hauptspiegelgehäuse 1, hierbei der Zusatzspiegel 7 jetzt nach vorne schauend. Zum Vollzug des Wendevorganges genügt eine Umdrehung des Hauptspiegelgehäusewandteils 3 um 180 Grad um die senkrechte Achse, unter Mitnahme des Zusatzspiegels 7 samt verbindenden Teilen (Kugelgelenk 6 oder Arm 33 und Kugelgelenk 32). Die geometrische Anordnung des Armes 4 oder des Armes 33 an dem Hauptspiegelgehäusewandteil 3 ist so getroffen, dass gemäss Fig. 1 und 5 der Zusatzspiegel 7 sich in einer vorgegebenen, von Spiegelfläche zu Spiegelfläche fluchtenden Grundstellung zum Hauptspiegel 10 befindet und gemäss Fig. 3 der Hauptspiegelgehäusewandteil 3 auch in dieser kehrseitigen Wendestellung im Rahmen 17 wieder formschlüssig placierbar ist, wenn der Zusatzspiegel 7 samt verbindenden Teilen (Kugelgelenk 6 oder Arm 33 und Kugelgelenk 32), aus der Gegenrichtung mitgewendet, in das Hauptspiegelgehäuse 1 eingeführt ist. Der Arm 33 weist keine Kupplungsvorrichtung 34 und kein Kupplungsrohr 31 auf, die in diesem Falle entbehrlich sind.

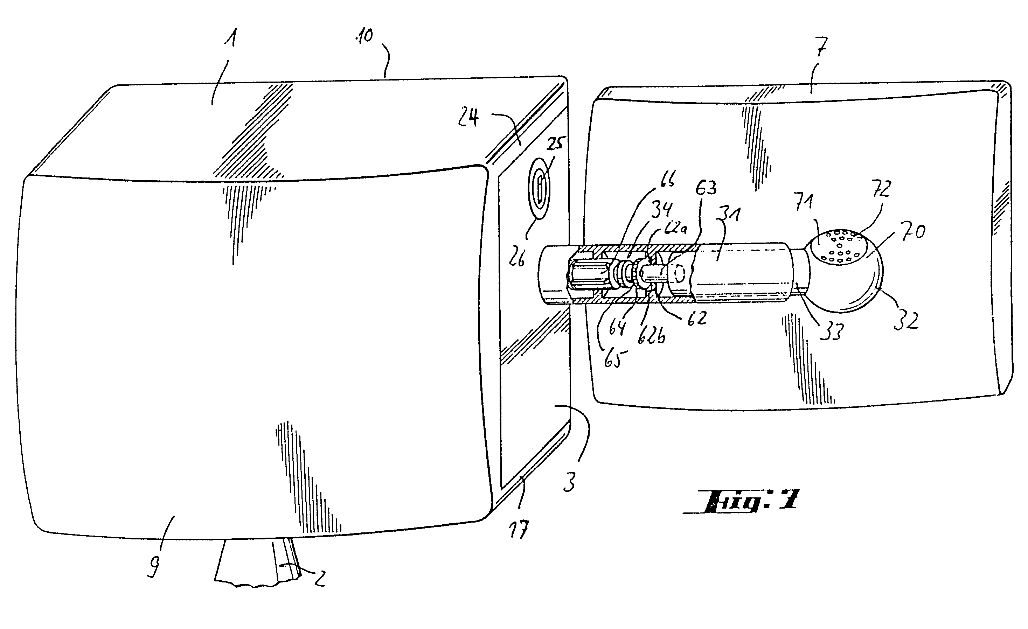

Fig. 6 zeigt den Hauptspiegelgehäusewandteil 3 nach dem Wendevorgang sowie den samt verbindenden Teilen (Kugelgelenk 6 oder Arm 33 und Kugelgelenk 32) mitgewendeten Zusatzspiegel 7 vor dem Einführen durch die Öffnung 30 in das Hauptspiegelgehäuse 1, hierbei jetzt der Zusatzspiegel 7 wieder nach hinten schauend. In diesem Falle weist der Arm 33 eine Kupplungsvorrichtung 34 und ein Kupplungsrohr 31 auf. Der Wendevorgang wird vollzogen durch Drehen des Zusatzspiegels 7 um 180 Grad um die Längsachse des Kugelgelenks 6 oder um die Längsachse des Armes 33 sowie durch Drehen des Hauptspiegelgehäusewandteils 3 um 180 Grad um seine senkrechte Achse unter Mitnahme des Zusatzspiegels 7 und der verbindenden Teile (Kugelgelenk 6 oder Arm 33 und Kugelgelenk 32). Die geometrische Anordnung des Armes 4 oder des Kupplungsrohres 31 des Armes 33 an dem Hauptspiegelgehäusewandteil 3 ist gemäss Fig. 1 und 7 so getroffen, dass der Zusatzspiegel 7 sich in einer vorgegebenen, von Spiegelfläche zu Spiegelfläche fluchtenden Grundstellung zum Hauptspiegel 10 befindet und gemäss Fig. 6 der Zusatzspiegel 7 nach dem Drehen von dem vorderen Rand 19 des plattenförmigen Hauptspiegelgehäusewandteils 3 so weit zurückgesetzt ist, dass der Hauptspiegelgehäusewandteil 3 nach Drehen um seine senkrechte Achse auch in dieser kehrseitigen Wendestellung im Rahmen 17 wieder formschlüssig placierbar ist, wenn der Zusatzspiegel 7 samt verbindenden Teilen (Kugelgelenk 6 oder Arm 33 und Kugelgelenk 32), aus der Gegenrichtung mitgewendet, in das Hauptspiegelgehäuse 1 eingeführt ist. Die erwähnten Wendevorgänge vermeiden wechselndes seitliches Versetzen des Hauptspiegelgehäusewandteils 3 nach vorne und nach hinten in den kehrseitigen Wendestellungen und das Entstehen von Versetzlücken. Die Ränder 18, 19 und 21 des Hauptspiegelgehäusewandteils 3 passen auch in deren kehrseitigen Wendestellungen zu den Rändern 16, 20 und 24 des Rahmens 17. Ein vorgesehenes Schloss 26 schliesst wieder an gleicher Stelle, eine vorgesehene Flügelschraube 28 ist wieder an gleicher Stelle verschraubbar.

In der Zeichnung ist der vordere Rand 20 des Rahmens 17 muldenförmig ausgebildet. Hierzu passend sind der vordere Rand 19 und der senkrechte hintere Rand des Hauptspiegelgehäusewandteils 3 abgerundet. Der untere Rand 18 des Hauptspiegelgehäusewandteils 3 und der untere Rand 16 des Rahmens 17, ebenso der obere Rand 21 des Hauptspiegelgehäusewandteils 3 und der obere Rand 24 des Rahmens 17 sind jeweils ebenflächig.

Wie Fig. 3 zeigt, wird bei leicht spitzwinkliger Führung des Hauptspiegelgehäusewandteils 3 zunächst dessen vorderer Rand 19 von hinten gegen den vorderen Rand 20 des Rahmens 17 eingeschoben, alsdann der plattenförmige Hauptspiegelgehäusewandteil 3 nach innen an den magnetischen Wandabschnitt 15 geklappt, wodurch der plattenförmige Hauptspiegelgehäusewandteil 3, nun an dem magnetischen Wandabschnitt 15 haftend und die Öffnung 13 bzw. 30 schliessend, im Rahmen 17 formschlüssig placiert ist.

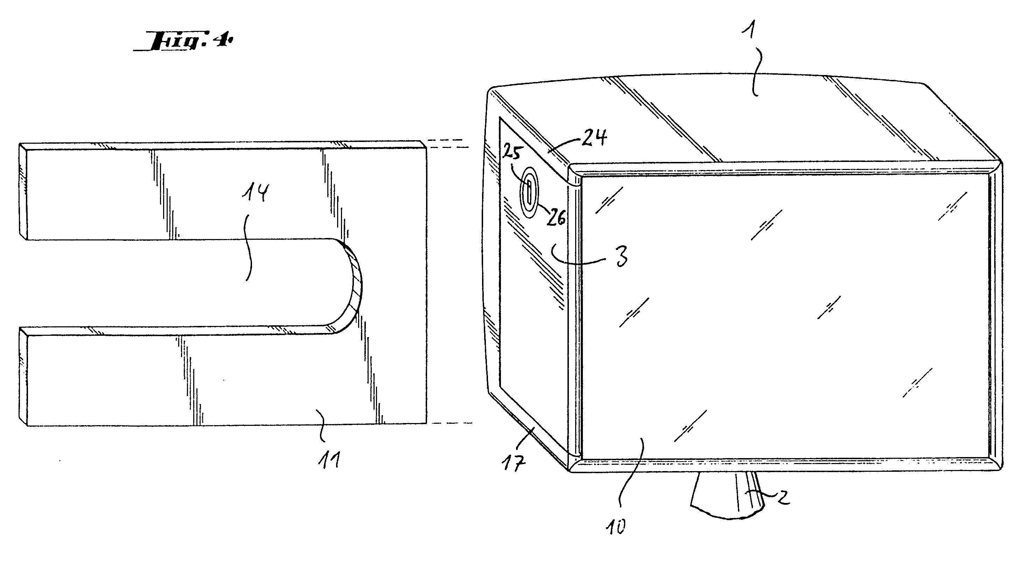

Der jeweils hintere Rand des Hauptspiegelgehäusewandteils 3 in dessen kehrseitigen Wendestellungen ergibt die äussere Spiegelwulst des Hauptspiegels 10 oder, bei beweglich eingebautem Hauptspiegel 10, die äussere Wulst des Hauptspiegelgehäuses 1, und zusätzlich eine Griffwulst, die das Einsetzen und das Abnehmen des Hauptspiegelgehäusewandteils 3 insbesondere gemäss Fig. 3 und 4 erleichtert.

In einem weiteren Ausführungsbeispiel können der untere Rand 16 des Rahmens 17 schwellenartig nach oben abgerundet, hierzu passend der untere Rand 18 des Hauptspiegelgehäusewandteils 3 nach oben ausgerundet und, radiusgerecht zu dem unteren Rand, der obere Rand 21 des Hauptspiegelgehäusewandteils 3 nach oben abgerundet und passend hierzu der obere Rand 24 des Rahmens 17 nach oben ausgerundet sein. Der jeweils hinten befindliche Rand des Hauptspiegelgehäusewandteils 3 in seinen kehrseitigen Wendestellungen ist nur um den äusseren Teil, der jeweils vorne befindliche Rand 19 nur um den inneren Teil etwas abgerundet, der Rand 20 des Rahmens 17 ebenfalls passend nur im inneren Teil etwas eingerundet.

Bei leicht spitzwinkliger Führung des plattenförmigen Hauptspiegelgehäusewandteils 3 wird zunächst dessen unterer Rand 18 von schräg oben auf den schwellenförmigen Rand 16 des Rahmens 17 aufgesetzt und alsdann der Hauptspiegelgehäusewandteil 3 nach innen an den magnetischen Wandabschnitt 15 geklappt, wodurch der Hauptspiegelgehäusewandteil 3, nun ab dem magnetischen Wandabschnitt 15 haftend und die Öffnung 13 bzw. 30 verdeckend, im Rahmen 17 formschlüssig placiert ist.

Aus dem oberen Rand 21 des Hauptspiegelgehäusewandteils 3 ragt im geschlossenen Zustand ein Riegel 22 heraus, der in die Schliessvertiefung 23 im Rahmen 17 hineinragt und den plattenförmigen Hauptspiegelgehäusewandteil 3 im Rahmen 17 verschliesst. Die Schlüsselöffnung 25 des Schlosses 26 ist in der Zeichnung deutlich sichtbar.

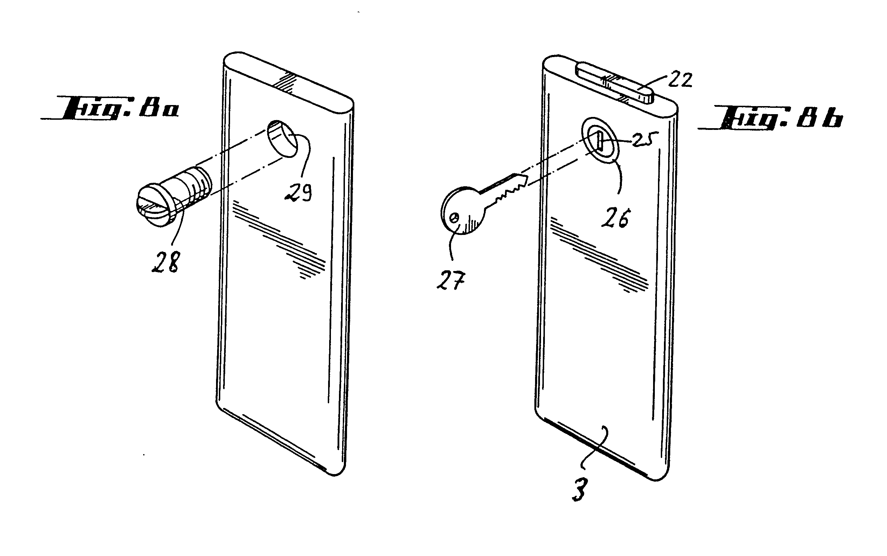

Fig. 8b zeigt eine vergrösserte Darstellung des Hauptspiegelgehäusewandteils 3 mit Schloss 26 und Schlüsselöffnung 25. Ausserdem ist der Schlüssel 27 zu erkennen, mit dessen Hilfe der Riegel 22 auf und ab bewegbar ist. Der Schlüssel 27 kann am Auto-Schlüsselbund mitgeführt werden.

Statt des Schlosses 26 kann eine Flügelschraube 28 verwendet werden, die durch ein Loch 29 in ein in der Zeichnung nicht dargestelltes Gewinde im Hauptspiegelgehäuse 1 einschraubbar ist.

Der Zusatzspiegel 7 kann mit dem vom Hauptspiegelgehäuse 1 abnehmbaren und in kehrseitigen Wendestellungen am Hauptspiegelgehäuse 1 befestigbaren Hauptspiegelgehäusewandteil 3 beispielsweise auch verbunden sein mittels einem senkrecht an diesem angebrachten Scharniergelenk mit Kugelgelenk 6 oder 32 oder mittels einem in gleicher Weise angebrachten Scharniergelenk mit Arm 33 und Kugelgelenk 6 oder 32, so dass nun der Zusatzspiegel 7 in allen Blickstellungen nach hinten und nach vorne verschwenkbar ist.

In Ausführungsbeispielen kann der Rahmen 17 auch einen hinteren Balken als hintere Berandung aufweisen.

Beispielsweise sind auch bogenförmige Ränder des Rahmens 17 und des Hauptspiegelgehäusewandteils 3 möglich.

Der Wendevorgang kann beispielsweise auch in der Weise vollzogen werden, dass der Hauptspiegelgehäusewandteil 3 nach dem Abnehmen vom Hauptspiegelgehäuse 1 um 180 Grad um die nach vorne gerichtete Achse unter Mitnahme des Zusatzspiegels 7 und der verbindenden Teile (Gelenke, Arm) gedreht wird. Hierfür ist der Zusatzspiegel 7 soweit vorne mit dem Hauptspiegelgehäusewandteil 3 verbunden, dass nach dem Wendevorgang und dem Einführen des Zusatzspiegels 7 samt verbindenden Teilen (Gelenke, Arm) in das Hauptspiegelgehäuse 1 der Hauptspiegelgehäusewandteil 3 auch in dieser kehrseitigen Wendestellung wieder formschlüssig im Rahmen 17 placierbar ist. Beispielsweise der vordere Rand 20 des Rahmens 17 und der vordere Rand 19 des Hauptspiegelgehäusewandteils 3 können nach vorne gebogen sein.

Wie Fig. 2 zeigt, können im Innenraum 12 des Hauptspiegelgehäuses 1 eine Zwischenwand, wie Fig. 4 noch gesondert dargestellt, als Leitwand 11, zugleich das Hauptspiegelgehäuse 1 versteifend, versehen mit einer Ausnehmung 14 für Gelenke und Arm, oder je eine gleichverlaufende Leitschiene an der Decke und am Boden angeordnet sein, die den Zusatzspiegel 7 beim Einführen in aufgerichteter Stellung leiten, Eigenbewegungen beschränken und ihn in einen abgegrenzten Raumteil führen.

Das Kugelgelenk 32 bei der in Fig. 5 und 7 dargestellten Anordnung kann über ein Kugelkopfgehäuse 70 mit einem durchsichtigen Blickfenster 71, das mit Fixierringen 72 versehen ist, verfügen. Der über einen kurzen Hals mit dem Zusatzspiegel 7 verbundene Kugelkopf ist mit entsprechenden Fixierpunkten versehen, so dass die am Kugelkopfgehäuse 70 vorhandenen Markierungen schnell und einfach ein genaues Einstellen des Zusatzspiegels 7 an einer grossen Anzahl fixierten Spiegelstellungen, sichtbar im Blickfenster gestatten, was insbesondere dann von Vorteil ist, wenn das Hauptspiegelgehäuse 1 mit seiner Halterung 2 am Kotflügel eines Fahrzeuges angebracht ist und der Zusatzspiegel 7 über eine vorgegebene fluchtende Grundstellung zum Hauptspiegel 10 verfügt. Die Fixierpunkte sind in je einer von hinten nach vorne verlaufenden Drei-Punkte-Reihe am Kugelkopf angeordnet auf der oberen Scheitellinie, an der äusseren seitlichen Scheitellinie, an der inneren seitlichen Scheitellinie und an der unteren Scheitellinie.

In Fig. 6 und 7 ist der Arm 33 in dem Kupplungsrohr 31 gelagert und wird mit Hilfe einer Kupplungsvorrichtung 34 gehalten. Die Kupplungsvorrichtung 34 gestattet es, den Arm 33 um seine Längsachse zu drehen und relativ zum Kupplungsrohr 31 zu verriegeln, so dass eine weitere Drehung nicht möglich ist.

Die Kupplungsvorrichtung 34 weist eine Druckfeder auf, die eine von dem plattenförmigen Hauptspiegelgehäusewandteil 3 wegweisende Kraft erzeugt. Die Kupplungsvorrichtung 34 verhindert im eingekuppelten Zustand eine Drehung des Armes 33 um die Längsachse. Durch Verschieben des Armes 33 in Richtung auf den plattenförmigen Hauptspiegelgehäusewandteil 3 ist die Kupplungsvorrichtung 34 auskuppelbar, so dass der Arm 33 im Kupplungsrohr 31 um seine Längsachse gedreht und damit der Zusatzspiegel 7 mit seiner Spiegelseite in Fahrtrichtung gedreht werden kann. Die Kupplungsvorrichtung 34 umfasst ein Kupplungswiderlager 62, das mit dem Kupplungsrohr 31 fest verbunden ist. Das Kupplungswiderlager 62 weist eine Öffnung 62a auf, durch die sich ein Hals 63 des Armes 33 erstreckt und in der Kupplungsrippen 62b vorgesehen sind, die sich in Längsrichtung des Kupplungsrohres 31 erstrecken. Am Hals 63 ist eine Kupplungsscheibe 64 drehfest angeordnet, in der Kupplungsnuten 65 ausgespart sind und die mit den Kupplungsrippen 62b des Kupplungswiderlagers 62 in Eingriff gebracht werden können. Über einen in Längsrichtung des Kupplungsrohres 31 verschiebbaren Kupplungs-Druckbolzen 66 drückt die Druckfeder die Kupplungsscheibe 64 in das Kupplungswiderlager 62. Dabei befindet sich die Kupplungsvorrichtung 34 im eingekuppelten Zustand und der Arm 33 kann nicht um seine Längsachse gedreht werden. Das Kupplungswiderlager 62 ist so ausgebildet, dass es gleichzeitig als Anschlag für die Kupplungsscheibe 64 fungiert.

Die Umdrehungen oder Wendungen um 180 Grad beziehen sich auch auf Umdrehungen oder Wendungen um ca. 180 Grad.

Der Zusatzspiegel 7, beweglich nach allen rückwärtigen Blickrichtungen, ist ein in der Grösse dem Hauptspiegel 10 etwa gleichwertiger Rückspiegel. Je nach Ausführungsbeispiel kann er auch kleinere Formate aufweisen, zum Beispiel kürzer sein.

Zur Befestigung des Hauptspiegelgehäuses 1 am Fahrzeug können gebräuchliche Gelenk-Halterungen verwendet werden.

Die Rückwand 9 des Hauptspiegelgehäuses 1 und der Rücken 8 des Zusatzspiegels 7 sind gewölbt.

Die Ausführungsbeispiele der Fahrzeugrückspiegelanordnung nach Fig. 1 bis 5 erfordern den geringsten technischen Aufwand und die wenigsten Handgriffe.

Für einzelne Teile des Rückspiegels können formstabile und abriebfeste Kunststoffe verwendet werden.

**Patentansprüche**

1. Fahrzeugrückspiegelanordnung, bestehend aus einem einen Hauptspiegel (10) aufweisenden Hauptspiegelgehäuse (1) und einem Zusatzspiegel (7), der mit dem Hauptspiegelgehäuse (1) verstellbar und bei Nichtgebrauch im Innenraum (12) des Hauptspiegelgehäuses (1) unterbringbar verbunden ist, dadurch gekennzeichnet, dass der Zusatzspiegel (7) gelenkig mit einer Wand bzw. einem Wandteil (3) des Hauptspiegelgehäuses (1) verbunden ist, die bzw. der zumindest teilweise vom Hauptspiegelgehäuse (1) abnehmbar und nach einem Wendevorgang in kehrseitiger Wendestellung am Hauptspiegelgehäuse (1) wieder befestigbar ist, so dass der Zusatzspiegel (7) mit der Gelenkverbindung (4, 6 bzw. 33, 32) zwischen der Hauptspiegelgehäusewand bzw. dem Hauptspiegelgehäusewandteil (3) und dem Zusatzspiegel (7) entweder ausserhalb des Hauptspiegelgehäuses (1) absteht oder in den Innenraum des Hauptspiegelgehäuses (1) hineinragt.

2. Fahrzeugrückspiegelanordnung nach Anspruch 1, dadurch gekennzeichnet, dass im Inneren des Hauptspiegelgehäuses (1) ein unmittelbar an die von dem den Zusatzspiegel (7) tragenden, abnehmbaren Teil der Hauptspiegelgehäusewand (3) ausgefüllte und von einem verbleibenden Rahmen (17) begrenzte Öffnung (13 bzw. 30) des Hauptspiegelgehäuses (1) anschliessender magnetischer Wandabschnitt (15) angeordnet ist, an dem der Hauptspiegelgehäusewandteil (3) magnetisch haftend anliegt und in formschlüssiger Verbindung mit dem Rahmen (17) die Öffnung (13 bzw. 30) schliesst.

3. Fahrzeugrückspiegelanordnung nach Anspruch 1 und 2, dadurch gekennzeichnet, dass der Hauptspiegelgehäusewandteil (3) plattenförmig ausgebildet ist.

4. Fahrzeugrückspiegelanordnung nach Anspruch 1 bis 3, dadurch gekennzeichnet, dass der Zusatzspiegel (7) derart mit dem Hauptspiegelgehäusewandteil (3) gelenkig verbunden ist, dass in Gebrauchstellung der Zusatzspiegel (7) im Verhältnis zum verlassenen Innenraum des Hauptspiegelgehäuses (1) nach hinten versetzt angeordnet ist, wobei zum Unterbringen des Zusatzspiegels (7) im Inneren des Hauptspiegelgehäuses (1) der Hauptspiegelgehäusewandteil (3) derart zu wenden ist, dass die Spiegelfläche des Zusatzspiegels (7) nach dem Wendevorgang zur Hauptspiegelgehäuserückwand (9) gerichtet ist.

5. Fahrzeugrückspiegelanordnung nach Anspruch 1 bis 4, dadurch gekennzeichnet, dass zwischen dem Zusatzspiegel (7) und dem den Zusatzspiegel (7) tragenden Hauptspiegelgehäusewandteil (3) mehrere, durch einen Arm (33) verbundene Gelenke vorgesehen sind.

6. Fahrzeugrückspiegelanordnung nach Anspruch 1 bis 5, dadurch gekennzeichnet, dass der den Zusatzspiegel (7) tragende Hauptspiegelgehäusewandteil (3) mit einem Schloss (26) versehen ist, dessen Riegel (22) in eine Schliessvertiefung (23) einrastbar ist, die in dem die Öffnung (13 bzw. 30) begrenzenden Rahmen (17) ausgebildet ist.

7. Fahrzeugrückspiegelanordnung nach Anspruch 1 bis 5, dadurch gekennzeichnet, dass der den Zusatzspiegel (7) tragende Hauptspiegelgehäusewandteil (3) ein Loch (29) zum Durchstecken einer Flügelschraube (28) aufweist, die am Hauptspiegelgehäuse (1) befestigbar ist.

8. Fahrzeugrückspiegelanordnung nach einem der Ansprüche 1 bis 7, dadurch gekennzeichnet, dass der das Gelenk (32) tragende Arm (33) mit einem von dem den Zusatzspiegel (7) tragenden Hauptspiegelgehäusewandteil (3) abstehenden Kupplungsrohr (31) teleskopartig verschiebbar und um seine Längsachse verstellbar mittels einer Kupplungsvorrichtung (34) verbunden ist.

9. Fahrzeugrückspiegelanordnung nach einem der Ansprüche 1 bis 8, dadurch gekennzeichnet, dass der Zusatzspiegel (7) mit der ganzen Hauptspiegelgehäusewand (3) gelenkig verbunden ist.

10. Fahrzeugrückspiegelanordnung nach einem der Ansprüche 1 bis 9, dadurch gekennzeichnet, dass zwischen dem Zusatzspiegel (7) und dem den Zusatzspiegel (7) tragenden Hauptspiegelgehäusewandteil (3) mehrere aneinandergefügte Gelenke vorgesehen sind.

**Claims**

1. A vehicle rear view mirror arrangement comprising a main mirror housing (1) having a main mirror (10), and an additional mirror (7) which is connected to the main mirror housing (1) in such a way that it can be adjusted and, when not in use, can be disposed in the interior (12) of the main mirror housing (1) characterised in that the additional mirror (7) is pivotally connected to a wall or a wall portion (3) of the main mirror housing (1), which is at least partially removable from the main mirror housing (1) and which, after being turned round, can be re-fixed to the main mirror housing (1) in a reversed turned position so that the additional mirror (7) with the pivot connection (4, 6 and 33, 32) between the main mirror housing wall or the main mirror housing wall portion (3) and the additional mirror (7) either projects outside the main mirror housing (1) or extends into the interior of the main mirror housing (1).

2. A vehicle rear view mirror arrangement according to claim 1 characterised in that disposed in the interior of the main mirror housing (1) is a magnetic wall section (15) which adjoins the opening (13 or 30) of the main mirror housing (1) which is filled by the removable part of the main mirror housing wall (3) carrying the additional mirror (7), and which is delimited by a remaining frame structure (17), the main mirror housing wall portion (3) bearing by magnetic attraction against said magnetic wall section (15) and closing the opening (13 or 30) in a condition of being positively connected to the frame structure (17).

3. A vehicle rear view mirror arrangement according to claims 1 or claim 2 characterised in that the main mirror housing wall portion (3) is of a plate-like configuration.

4. A vehicle rear view mirror arrangement according to claims 1 to 3 characterised in that the additional mirror (7) is pivotally connected to the main mirror housing wall portion (3) in such a way that in the position of use the additional mirror (7) is arranged displaced rearwardly in relation to the vacated interior of the main mirror housing (1), wherein for the purposes of disposing the additional mirror (7) in the interior of the main mirror housing (1) the main mirror housing wall portion (3) is to be turned round in such a way that the mirror surface of the additional mirror (7), after the turning operation, is directed towards the main mirror housing rear wall (9).

5. A vehicle rear view mirror arrangement according to claims 1 to 4 characterised in that disposed between the additional mirror (7) and the main mirror housing wall portion (3) carrying the additional mirror (7) are a plurality of pivots connected by an arm (33).

6. A vehicle rear view mirror arrangement according to claims 1 to 5 characterised in that the main mirror housing wall portion (3) which carries the additional mirror (7) is provided with a lock (26) whose bolt (22) can be engaged into a locking recess (23) provided in the frame structure (17) defining the opening (13 or 30).

7. A vehicle rear view mirror arrangement according to claims 1 to 5 characterised in that the main mirror housing wall portion (3) which carries the additional mirror (7) has a hole (29) for passing therethrough a wing-headed screw (28) which can be fixed to the main mirror housing (1).

8. A vehicle rear view mirror arrangement according to one of claims 1 to 7 characterised in that the arm (33) which carries the pivot (32) is telescopically displaceable with a coupling tube (31) which projects from the main mirror housing wall portion (3) carrying the additional mirror (7), and is connected adjustably about its longitudinal axis by means of a coupling device (34).

9. A vehicle rear view mirror arrangement according to one of claims 1 to 8 characterised in that the additional mirror (7) is pivotally connected to the entire main mirror housing wall (3).

10. A vehicle rear view mirror arrangement according to one of claims 1 to 9 characterised in that a plurality of interconnected pivots are provided between the additional mirror (7) and the main mirror housing wall portion (3) which carries the additional mirror (7).

## Revendications

1. Dispositif de miroir rétroviseur de véhicule, constitué d'un boîtier de miroir principal (1) comportant un miroir principal (10) et d'un miroir additionnel (7), qui est relié au boîtier de miroir principal (1) de manière mobile et pouvant être, lorsqu'il n'est pas utilisé, inséré dans l'espace intérieur (12) du boîtier de miroir principal (1), caractérisé en ce que le miroir additionnel (17) est relié de manière articulée à une paroi, respectivement une partie de paroi (3) du boîtier de miroir pricipal (1), qui peut être séparée au moins partiellement du boîtier de miroir principal (1) et qui après un retournement en position inverse peut être à nouveau relié au boîtier de miroir principal (1), de manière telle que le miroir additionnel (7) avec l'articulation (4, 6; respectivement 33, 32) entre la paroi du boîtier de miroir principal, respectivement la partie de paroi du boîtier de miroir principal (3) et ledit miroir additionnel (7) ou bien soit disposé à l'écart à l'extérieur du boîtier de miroir principal (1), ou bien pénètre dans l'espace intérieur du boîtier de miroir principal (1).

2. Dispositif de miroir rétroviseur de véhicule selon la revendication 1, caractérisé en ce que à l'intérieur du boîtier de miroir principal (1) est disposé une section de paroi (15) de raccordement magnétique directement à l'ouverture (13; respectivement 30) du boîtier de miroir principal (1) remplie par la partie mobile de la paroi (3) du boîtier de miroir principal supportant le miroir additionnel (7) et délimitée par un cadre résiduaire (17), section de paroi à laquelle est reliée et maintenue magnétiquement la partie de paroi (3) du boîter de miroir principal, en fermant, par liaison à blocage avec le cadre (17) l'ouverture (13; respectivement 30).

3. Dispositif de miroir rétroviseur de véhicule selon l'une quelconque des revendications 1 et 2, caractérisé en ce que la partie de paroi (3) du boîtier de miroir principal est conformée en plaque.

4. Dispositif de miroir rétroviseur de véhicule selon les revendications 1 à 3, caractérisé en ce que le miroir additionnel (7) est relié de manière articulée à la partie de paroi (3) du boîtier de miroir principal de manière telle que, en position d'utilisation, le miroir additionnel (7) soit disposé décalé vers l'arrière par rapport à l'espace intérieur, où il était disposé du boîtier de miroir principal (1), la partie de paroi du boîtier de miroir principal (3) devant en conséquence, pour amener le miroir additionnel (7) dans l'espace intérieur du boîtier de miroir principal (1), être retournée de manière telle que la surface de miroir du miroir additionnel (7) soit dirigée, après retournement, vers la paroi arrière (9) du boîtier de miroir principal.

5. Dispositif de miroir rétrouviseur de véhicule selon les revendications 1 à 4, caractérisé en ce que entre le miroir additionnel (7) et la partie de paroi (3) du boîtier de miroir principal (3) supportant ledit miroir additionnel sont prévues une pluralité d'articulations reliées par un bras (33).

6. Dispositif de miroir rétroviseur de véhicule selon les revendications 1 à 5, caractérisé en ce que la partie de paroi (3) du boîtier de miroir principal supportant le miroir additionnel (7) est munie d'une serrure (26), dont le pêne peut pénétrer dans un évidement de fermeture (23) ménagé dans le cadre (17) délimitant l'ouverture (13; respectivement 30).

7. Dispositif de miroir rétroviseur de véhicule selon les revendications 1 à 5, caractérisé en ce que la partie de paroi (3) du boîtier de miroir principal supportant le miroir additionnel (7) présente un trou (29) pour le passage d'une vis à oreilles (28), qui peut être fixée au boîtier de miroir principal.

8. Dispositif de miroir rétroviseur de véhicule selon les revendications 1 à 7, caractérisé en ce que le bras (33) supportant l'articulation (32) est relié par le biais d'un dispositif de liaison (34), avec un tube de liaison (31) partant de la partie de paroi (3) du boîtier de miroir principal supportant le miroir additionnel (7), de manière à pouvoir coulisser de manière télescopique et se déplacer le long de son axe longitudinal.

9. Dispositif de miroir rétroviseur de véhicule selon l'une quelconque des revendications 1 à 8, caractérisé en ce que le miroir additionnel (7) est relié de manière articulée avec l'ensemble de la paroi du boîtier de miroir principal (3).

10. Dispositif de miroir rétroviseur de véhicule selon l'une quelconque des revendications 1 à 9, caractérisé en ce que entre le miroir additionnel (7) et la partie de paroi (3) du boîtier de miroir principal (3) supportant le miroir additionnel (7) sont prévues plusieurs articulations disposées côte à côte.

**Fig. 1**

Fig. 2

**Fig.3**

Fig. 4.

**Fig:5**

Fig. 6

Fig. 2

Fig. 8a

Fig. 8b

*Fig: 9*